Europäisches Patentamt

European Patent Office

Office européen des brevets

Veröffentlichungsnummer: **0 276 336**
**A2**

## EUROPÄISCHE PATENTANMELDUNG

(21) Anmeldenummer: 87100987.4

(51) Int. Cl.⁴ **H04N 3/185**

(22) Anmeldetag: 24.01.87

(43) Veröffentlichungstag der Anmeldung:
03.08.88 Patentblatt 88/31

(84) Benannte Vertragsstaaten:
**AT DE FR GB IT SE**

(71) Anmelder: **Blaupunkt-Werke GmbH**
**Robert-Bosch-Strasse 200**
**D-3200 Hildesheim(DE)**

(72) Erfinder: **Schmadel, Karl-Hans**
**Mozartstrasse 2**
**D-3201 Diekholzen 3(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) Schaltungsanordnung zur Erzeugung einer Hochspannung zum Betrieb einer Bildröhre.

(57) Bei einer Schaltungsanordnung zur Erzeugung einer Hochspannung zum Betrieb einer Bildröhre wird die Primärwicklung eines Transformators über einen Halbleiterschalter periodisch mit einer Betriebsspannungsquelle verbunden. Die Sekundärwicklung ist in mehrere Teilwicklungen aufgeteilt, welche über Dioden miteinander verbunden sind. Eine weitere Diode bildet den Ausgang für die Hochspannung. Eine von der Hochspannung abgeleitete Regelspannung wird einem Regler zur Konstanthaltung der Hochspannung zugeführt, dabei kann die Breite der Ansteuerimpulse des Halbleiterschalters oder die Betriebsspannung gesteuert werden.

EP 0 276 336 A2

Fig. 3

## Schaltungsanordnung zur Erzeugung einer Hochspannung zum Betrieb einer Bildröhre

Die Erfindung geht aus von einer Schaltungsanordnung nach der Gattung des Hauptanspruchs.

Die Bildröhre von Fernsehgeräten, Video-Monitoren, Datensichtgeräten benötigt eine Betriebsspannung in der Größenordnung von 15 bis 25 kV, zu deren Erzeugung verschiedene Schaltungen bekannt geworden sind. Am weitesten verbreitet ist die Verbindung der Erzeugung der Hochspannung mit der Horizontal-Ablenkung. Dabei ist jedoch eine unabhängige Regelung der Hochspannung und der Bildbreite nur schwer möglich. Die Anordnung jeweils einer getrennten Schaltung zur Erzeugung der Hochspannung und zur Horizontal-Ablenkung ermöglicht zwar eine getrennte Regelung der Hochspannung sowie der Horizontal-Ablenkung; die bekannten Schaltungen bedeuten allerdings einen recht erheblichen Aufwand.

Die erfindungsgemäße Schaltungsanordnung mit den kennzeichnenden Merkmalen des Hauptanspruchs hat demgegenüber den Vorteil, daß eine gute Regelbarkeit der Hochspannung erzielt wird, wobei der technische Aufwand gering gehalten wird.

Durch die in den Unteranspruchen aufgeführten Maßnahmen sind vorteilhafte Weiterbildungen und Verbesserungen der im Hauptanspruch agegebenen Erfindung möglich.

Besonders vorteilhaft ist, gemäß einer der Weiterbildungen der Erfindung den Regler als Pulsbreitenmodulator auszuführen und ihn zur Ansteuerung des Halbleiterschalters zu verwenden. Dadurch wird der Aufwand weiterhin verringert und die Herstellung einer kompakten Baugruppe zur Erzeugung einer Hochspannung zum Betrieb einer Bildröhre ermöglicht.

Ausführungsbeispiele der Erfindung sind in der Zeichnung an Hand mehrerer Figuren dargestellt und in der nachfolgenden Beschreibung näher erläutert. Es zeigt:

Fig. 1 ein Schaltbild eines Hochspannungswandlers, bei welchem eine impulsförmige Spannung transformiert wird,

Fig. 2 ein Schaltbild eines Hochspannungswandlers, bei welchem eine sinusförmige Spannung transformiert wird,

Fig. 3 ein Blockschaltbild einer erfindungsgemäßen Schaltungsanordnung,

Fig. 4 mehrere stark vereinfachte Blockschaltbilder zur Erläuterung der Regelmöglichkeiten gemäß verschiedener Weiterbildungen der Erfindung.

Gleich Teile sind in den Figuren mit gleichen Bezugszeichen versehen.

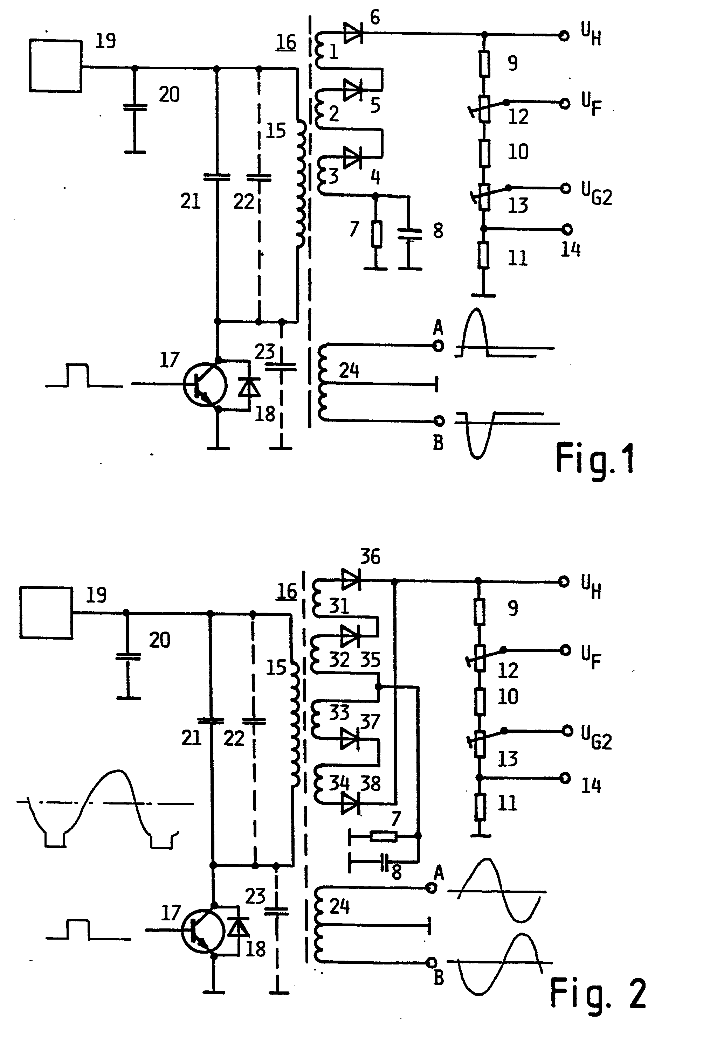

Der in Fig. 1 dargestellte Hochspannungswandler ist ein sogenannter Diode-Split-Transformer, bei welchem die Sekundärwicklung in mehrere Teilwicklungen 1, 2, 3 aufgeteilt ist, welche jeweils mit Dioden 4, 5 und 6 in Reihe geschaltet sind. Der Fußpunkt der Wicklung 3 ist über einen Widerstand 7 und einen Kondensator 8 mit Massepotential verbunden. An dem Widerstand 7 ist in an sich bekannter Weise eine dem Strahlstrom $I_s$ entsprechende Spannung abnehmbar, welche zu Regelzwecken bzw. zur Auslösung einer elektronischen Sicherung im Falle eines Kurzschlusses im Hochspannungskreis genutzt werden kann. An der Kathode der Diode 6 kann die Hochspannung $U_H$ abgenommen werden. Ferner ist an die Kathode der Diode 6 ein Spannungsteiler angeschlossen, der teilweise aus festen Widerständen 9, 10, 11 und teilweise aus Einstellpotentiometern 12, 13 besteht An den Abgriffen der Einstellpotentiometer 12, 13 können die Spannungen $U_F$ für die Fokussierung sowie die Schirmgitterspannung $U_{G2}$ abgenommen werden.

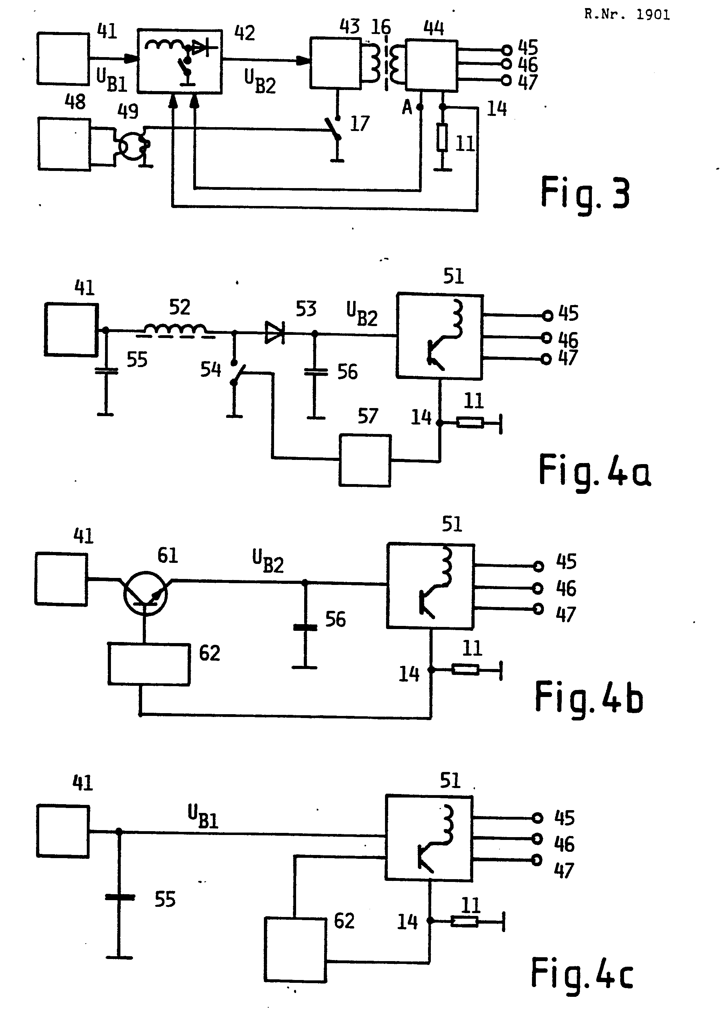

Am Schaltungspunkt 14 kann eine Regelspannung abgenommen werden, welche proportional zur Hochspannung $U_H$ ist und zur Regelung der Hochspannung im Sinne einer Konstanthaltung verwendet werden kann (Fig. 3 und Fig. 4).

Die Primärwicklung 15 des Transformators 16 ist über einen Halbleiterschalter 17, welchem eine Freilaufdiode 18 zugeordnet ist, periodisch an die Betriebsspannung angeschlossen. Dazu werden dem Halbleiterschalter 17 an seinem Steuereingang Impulse, vorzugsweise mit Zeilenfrequenz, zugeführt. Die Betriebsspannung wird von einer Betriebsspannungsquelle 19 geliefert und ist mit Hilfe eines Kondensators 20 abgeblockt. Parallel zur Primärwicklung liegt ein weiterer Kondensator 21. Ferner sind in Fig. 1 Schaltkapazitäten 22 und 23 angedeutet.

Schließlich verfügt der Transformator 16 über eine weitere Wicklung 24, deren Mittelanzapfung auf Massepotential liegt und an deren Enden A und B gegenphasige Impulse abnehmbar sind.

Die Schaltung nach Fig. 1 arbeitet ähnlich wie eine Ablenkschaltung, d. h während der nichtleitenden Phasen des Halbleiterschalters 17 steigt der Strom durch die Primärwicklung etwa zeitlinear von einem Spitzenwert zu dem anderen an, wechselt dann während der Sperrzeit des Halbleiterschalters 17 seine Polarität relativ schnell, wobei ein relativ hoher Spannungsimpuls entsteht, und beginnt wieder von neuem zunächst durch die Diode 18 und dann durch den Halbleiterschalter 17 einen etwa zeitlinearen Anstieg zu vollführen. Die Spannungsimpulse werden dann auf die Sekundärwicklung übertragen und zur Hochspannung $U_H$ gleichgerichtet. Durch eine Steuerung der Breite der Ansteuerimpulse ist eine Steuerung der Spannung möglich.

Ein ebenfalls bei der vorliegenden Erfindung verwendbarer Hochspannungswandler ist in Fig. 2 dargestellt. Dabei ist der grundsätzliche Aufbau ähnlich wie beim Hochspannungswandler nach Fig. 1, so daß im folgenden lediglich die Abweichungen erläutert sind. Und zwar sind beim Hochspannungswandler nach Fig. 2 die Zeitkonstanten, welche durch die Kondensatoren und Induktivitäten gebildet werden derart ausgelegt, daß während der nichtleitenden Phase des Halbleiterschalters 17 eine etwa sinusförmige Schwingung vollführt wird. Dadurch wird auch in der Sekundärwicklung eine sinusförmige Spannung induziert. Bei der Gleichrichtung werden beide Halbwellen der sinusförmigen Spannung ausgenutzt. Es ist daher eine gerade Anzahl von Teilwicklungen 31, 32, 33, 34 vorgesehen, wobei die Anschlüsse der Teilwicklungen 32 und 33 eine Mittelanzapfung bilden, welche über den Widerstand 7 und den Kondensator 8 mit Massepotential verbunden ist.

Die Wicklungen 31 und 32 sowie die Dioden 35 und 36 dienen zur Erzeugung bzw. Gleichrichtung der einen Halbwelle, während die Teilwicklungen 33 und 34 sowie die Dioden 37 und 38 für die andere Halbwelle vorgesehen sind. An den Anschlüssen A und B der zusätzlichen Wicklung 24 stehen anstelle der Impulsspannungen sinusförmige Spannungen an. Auch bei der Schaltung nach Fig. 2 ist eine Steuerung der Hochspannung mit Hilfe des Tastverhältnisses der dem Halbleiterschalter 17 zugeführten Ansteuerimpulse möglich.

Bei dem in Fig. 3 gezeigten Blockschaltbild einer erfindungsgemäßen Schaltungsanordnung wird aus einem Netzteil 41 eine ungeregelte Betriebsspannung $U_{B1}$ gewonnen. Daraus wird mit Hilfe eines Schaltreglers 42 eine steuerbare Spannung $U_{B2}$ abgeleitet, welche einem Hochspannungswandler als Betriebsspannung zugeführt ist. Als Hochspannungswandler eignet sich eine der in den Figuren 1 und 2 erläuterten Schaltungen. In Fig. 3 ist ein derartiger Hochspannungswandler lediglich schematisch durch einen Primärteil· 43, einen Transformator 16, einen Halbleiterschalter 17 sowie einen Sekundärteil 44 dargestellt. Der Spannungsabfall am Widerstand 11 wird dem Schaltregler 42 als Regelspannung zugeführt. Ferner wird ein am Anschluß A abgenommener Impuls bzw. sinusförmige Wechselspannung zur Synchronisierung des Schaltreglers 42 diesem zugeführt. Dieses hat den Vorteil, daß bei Ausfall der Hochspannungserzeugung, beispielsweise durch Kurzschluß, auch der Schaltregler 42 abgeschaltet wird.

An den Anschlüssen 45, 46 und 47 sind die Hochspannung, die Fokussierspannung und die Schirmgitterspannung abnehmbar. In Fig. 3 ist ferner eine weitere Ausgestaltung der Erfindung dargestellt, bei welcher der Halbleiterschalter 17 mit Hilfe der Horizontal-Ablenkschaltung 48 gesteuert wird. Dabei ist zwischen den Ausgang der Horizontal-Ablenkschaltung 48 und den Steuereingang des Halbleiterschalters 17 ein Strom/Spannungs-Wandler 49 geschaltet. Der Strom/Spannungs-Wandler 49 erzeugt eine dem Ablenkstrom entsprechende Spannung. Sofern eine Unterbrechung im Ablenkstromkreis erfolgt, wird ebenso wie bei einem Ausfall der Horizontal-Ablenkstufen keine Ansteuerung für den Halbleiterschalter 17 erzeugt, wodurch auch die Hochspannung abgeschaltet wird. Der Strom/Spannungs-Wandler 49 kann wie in Fig. 3 angedeutet ein transformatorischer Wandler sein; es ist jedoch auch ein mit den Ablenkspulen in Reihe geschalteter Widerstand als Strom/Spannungs-Wandler verwendbar.

Mit Hilfe von stark vereinfachten Blockschaltbildern sind in Fig. 4 verschiedene Regelmöglichkeiten angedeutet, die im Bereich der Erfindung liegen. Bei dem Blockschaltbild nach Fig. 4a ist zwischen dem Netzteil 41 und dem Hochspannungswandler 51 ein Schaltregler, bestehend aus einer Induktivität 52, einer Diode 53 und einem Halbleiterschalter 54 angeordnet. Sowohl die ungeregelte Ausgangsspannung des Netzteils 41 als auch die Ausgangsspannung des Schaltreglers sind mit Kondensatoren 55, 56 abgeblockt. Zwischen den Ausgang 14 des Hochspannungswandlers und einen Steuereingang des Halbleiterschalters 54 ist ein Pulsbreitenmodulator 57 geschaltet. Damit wird die Betriebsspannung $U_{B2}$ des Hochspannungswandlers 51 im Sinne einer Konstanthaltung der Hochspannung geregelt. Bei dem in Fig. 4b dargestellten Ausführungsbeispiel wird ebenfalls die Betriebsspannung $U_{B2}$ des Hochspannungswandlers 51 geregelt, wobei ein Transistor 61 als Längsregler vorgesehen ist. Die Basis des Transitors 61 wird in an sich bekannter Weise über ein Stellglied 62 in Abhängigkeit von der bei 14 vom Hochspannungswandler 51 entnommene Regelspannung gesteuert.

Bei dem in Fig. 4c dargestellten Ausführungsbeispiel wird der Hochspannungswandler 51 mit einer ungeregelten Regelspannung $U_{B1}$ aus dem Netzteil 41 versorgt. Zur Regelung der Hochspannung wird die Regelspannung dem Ausgang 14 des Hochspannungswandlers 41 entnommen und einem Pulsbreitenmodulator 62 zugeführt, welcher dem Halbleiterschalter 17 (Fig. 1) im Hochspannungswandler 51 als Treiber dient.

## Ansprüche

1. Schaltungsanordnung zur Erzeugung einer Hochspannung zum Betrieb einer Bildröhre, dadurch gekennzeichnet,
daß die Primärwicklung eines Transformators (16) über einen Halbleiterschalter (17) periodisch mit einer Betriebsspannungsquelle (19) verbindbar ist,
daß die Sekundärwicklung in mehrere Teilwicklungen (1, 2, 3; 31, 32, 33, 34) aufgeteilt ist, welche über Dioden (4, 5; 35, 37) miteinander verbunden sind,
daß eine weitere Diode (6; 36, 38) zwischen einer Teilwicklung (1; 31, 34) und dem Ausgang für die Hochspannung angeordnet ist, an welchen ein Spannungsteiler (9, 10, 11, 12, 13) angeschlossen ist, an dessen einem Ausgang (14) eine Regelspannung abnehmbar ist, und
daß die Regelspannung einem Regler zur Konstanthaltung der Hochspannung zuführbar ist.

2. Schaltungsanordnung nach Anspruch 1, dadurch gekennzeichnet, daß der Regler (62) einen Pulsbreitenmodulator umfaßt und zur Erzeugung von Ansteuerimpulsen für den Halbleiterschalter (17) vorgesehen ist.

3. Schaltungsanordnung nach Anspruch 1, dadurch gekennzeichnet, daß der Regler (42) in Abhängigkeit von der Regelspannung die Betriebsspannung steuert.

4. Schaltungsanordnung nach Anspruch 3, dadurch gekennzeichnet, daß der Regler (42) ein Schaltregler 52, 53, 54, 57) ist, welcher in die Zuführung der Betriebsspannung eingefügt ist und einen Pulsbreitenmodulator (57) umfaßt.

5. Schaltungsanordnung nach Anspruch 3, dadurch gekennzeichnet, daß der Regler (42) in die Zuführung der Betriebsspannung eingefügt ist und als Längsregler (61, 62) ausgeführt ist.

6. Schaltungsanordnung nach Anspruch 1, dadurch gekennzeichnet, daß der von dem Transformator (16), dem Halbleiterschalter (17), den Dioden und mindestens einem Kondensator (21) gebildete Spannungswandler derart ausgelegt ist, daß während nichtleitender Phasen des Halbleiterschalters (17) eine angenäherte Sinusschwingung entsteht.

7. Schaltungsanordnung nach Anspruch 6, dadurch gekennzeichnet, daß die Sekundärwicklung eine gerade Anzahl von Teilwicklungen (31, 32, 33, 34) umfaßt, welche in Reihe geschaltet sind, wobei ausgehend von zwei eine Mittelanzapfung bildenden Anschlüssen von Teilwicklungen abwechselnd jeweils eine Teilwicklung und eine Diode in Reihe geschaltet sind, wobei die von den Wicklungen abgewandten Elektroden der letzten Dioden zusammengefaßt sind und den Ausgang für die Hochspannung bilden.

8. Schaltungsanordnung nach Anspruch 1, dadurch gekennzeichnet, daß der von dem Transformator (16), dem Halbleiterschalter (17) und den Dioden gebildete Spannungswandler derart ausgelegt ist, daß an den Wicklungen des Transformators (16) Impulse mit einer Impulsbreite von kleiner als 50 % anstehen.

9. Schaltungsanordnung nach Anspruch 1, dadurch gekennzeichnet, daß dem Halbleiterschalter (17) Ansteuerimpulse zuführbar sind, die von einem Horizontal-Ablenkstrom abgeleitet sind.

10. Schaltungsanordnung nach Anspruch 9, dadurch gekennzeichnet, daß zur Ableitung der Ansteuerimpulse ein vom Horizontal-Ablenkstrom durchflossener Strom-Spannungswandler (49) vorgesehen ist.

0 276 336

R.Nr. 1901

Fig.1

Fig. 2

0 276 336

R.Nr. 1901

Fig. 3

Fig. 4a

Fig. 4b

Fig. 4c